# EUROPÄISCHE PATENTANMELDUNG

(11) **EP 1 531 514 A1**
(43) Veröffentlichungstag der Anmeldung: **18.05.2005**
(21) Anmeldenummer: 04027027.4
(22) Anmeldetag: 13.11.2004
(51) Int. Cl.: H01M 10/38, H01M 4/64, H01M 4/66

(54) **Galvanisches Element**

(30) Priorität: 14.11.2003 DE 10354524
(71) Anmelder: VARTA Microbattery GmbH, 30419 Hannover (DE); ROWO Coating GmbH, 79336 Herbolzheim (DE)
(72) Erfinder: Birke, Peter, Dr., 73479 Ellwangen (DE); Wöhrle, Thomas, Dr., 73479 Ellwangen (DE); Haug, Peter, Dr., 73479 Ellwangen (DE); Perner, Arno, Dr., 73479 Ellwangen (DE); Birke-Salam, Fatima, Dr., 73479 Ellwangen (DE); Hald, Rainer, 73479 Ellwangen (DE); Holl, Konrad, Dr., 73434 Aalen-Dewangen (DE); Ilic, Dejan, Dr., 73479 Ellwangen (DE); Kohlberger, Markus, 73479 Ellwangen (DE); Maier, Johannes, 73479 Ellwangen (DE); Müller, Roland, Dr., 79336 Herbolzheim (DE); Siefert, Wolfgang, Dr., 79336 Herbolzheim (DE)
(74) Vertreter: Patentanwälte Ruff, Wilhelm, Beier, Dauster & Partner

(57) **Zusammenfassung**

Bei einem galvanischen Element mit mindestens einer Lithium interkalierenden Elektrode ist der im wesentlichen aus Al bestehende Ableiter der positiven Elektrode mit einer Cu-Al-Legierung beschichtet. Die Beschichtungslegierung besteht vorzugsweise überwiegend aus Cu. Sie enthält 0,1 bis 40 Gew.-% Al, Rest Cu, vorzugsweise 10 bis 20 Gew.-% Al, insbesondere 13 bis 17 Gew.-% Al, Rest Cu. Der Ableiter ist ein Aluminiumstreckgitter bzw. Aluminiumstreckmetall oder eine in beliebiger Geometrie gelochte oder eine massive Aluminiumfolie.

Die Beschichtungslegierung ist mittels einer physikalischen oder chemischen Dampfabscheidung und Co-Verdampfung auf den Al-Ableiter aufgebracht.

## Beschreibung

Gegenstand der Erfindung ist ein galvanisches Element mit mindestens einer Lithium interkalierenden Elektrode, dessen positive Elektrode einen vorbehandelten, im wesentlichen aus Aluminium bestehenden Ableiter besitzt.

Die aktiven Elektrodenmaterialien derartiger galvanischer Elemente sind anorganische Verbindungen, die in der Lage sind, Ionen des elektronegativsten und gleichzeitig drittleichtesten Elementes Lithium reversibel ein- und auszulagern. Typische Beispiele für die negative Elektrode sind hierbei graphitartige Kohlenstoffe, für die positive Elektrode Lithiumübergangsmetalloxide wie LiCoO₂. Die dabei möglichen Lithiumaktivitäten resultieren in erreichbaren Spannungen von mehr als 4 V in der vollgeladenen Zelle/Batterie, weitere Erhöhungen der Spannungen sind zur Zeit im wesentlichen nur noch durch die Zersetzungsspannung der verwendeten organisch basierten Lithiumelektrolyte bedingt. Die Kombinationen hoher erreichbarer Spannungen mit leichten Materialien wie Graphit führen in diesen Zellen zu den zur Zeit höchsten erreichbaren volumetrischen und gravimetrischen Energiedichten für wiederaufladbare galvanische Zellen.

In einer besonderen Ausgestaltung werden die aktiven Elektrodenmaterialien zunächst auf die auch als Kollektor bezeichneten Ableitelektroden/Ableiter mittels direkter Beschichtung oder Lamination aufgebracht und anschließend mit einem vorbeschichteten Polyolefinseparator durch Lamination verbunden. Der so entstandene Verbund zeichnet sich durch die sehr gute mechanische und elektrische Kontaktierung aller Bestandteile untereinander aus.

In solchen wiederaufladbaren Lithiumzellen mit typischen Nennspannungen von 3,7 V und maximalen Ladespannungen von 4,2 V wird auf der positiven Seite in der Regel aus Gründen der Gewichts- und Kostenersparnis aber auch der elektrochemischen Stabilität Aluminium als Kollektor- bzw. Ableitermaterial verwendet. Die natürliche Oxidschicht des Aluminiums verhindert dabei jedoch optimale Elektrodenhaftung und niedrige Impedanzen. Eine geringe Impedanz bedeutet auch immer höhere Belastbarkeit, ganz besonders unter Pulsprofilen, und damit höhere Nutzkapazitäten. Derartige Pulsprofile sind üblich bei dem Betreiben eines jeden schnurlosen Telefons, ein relativ niedriger kontinuierlicher Grundstrom im Bereich von einigen hundert Milliampere wechselt im Millisekundentakt mit einem Puls im Bereich von bis zu 2 Ampere, der Puls ist dabei im Submillisekundenbereich.

Kollektorbeschichtungen aus organischen Leitfähigkeitsverbessern, im folgenden als sogenannte "Primer" bezeichnet, können noch zusätzliche Säuregruppen enthalten, durch die eine in-situ Ätzung des Kollektors erfolgt. Die Ätzung und damit die Säuregruppen sind aber nicht zwingend, und es kann sogar vollständig darauf verzichtet werden. Dies wird mit dem herabgesetzten Übergangswiderstand zwischen dem Aluminium und dem Primer erklärt, da letzterer hochleitfähige Partikel (in der Regel Kohlenstoffe oder Metallpartikel) enthält, die dann auf einem ebenfalls sehr gut leitfähigen metallischen Träger, nämlich dem Aluminium, aufgebracht sind. Ein bekanntes Problem dabei ist aber die elektrochemische Instabilität bei hohen Temperaturen und voll geladenen Zellen.

Das Dokument DE 198 07 192 A1 beschreibt eine Beschichtung eines Aluminium-Kollektors für eine Lithium-Ionen-Zelle mittels Zink und Zink-Oxid. Hierbei wird der Kollektor vorher basisch geätzt. Von Vorteil ist ein Schutz gegen schnelle Korrosion, nachteilig ist aber die Art der Konservierung, da mit der Zeit davon auszugehen ist, daß das Zink an der positiven Elektrode durch vollständige Oxidation zu Zinkoxid insbesondere bei höheren Temperaturen die Impedanz ansteigen lassen wird und, wie Versuche gezeigt haben, daraus schlechtes Zyklisierungsverhalten resultiert.

Die Druckschriften DE 100 30 571 C1, US 5,824,120 und US 5,798,190 beschreiben Primer bzw. elektronisch leitfähige Haftvermittler mit Leitrußen und Leitgraphiten. Bei dieser Kollektorbehandlung muß die Oxidschicht nicht in einem Ätzprozeß zuvor entfernt werden. Wie schon erwähnt, enthalten die Leitfähigkeitsverbesserer bei einer möglichen Ausführung noch zusätzliche Säuregruppen, durch die eine in-situ Ätzung erfolgt. Diese besondere Ausführung und die Ätzung sind aber nicht zwingend. Der elektrisch leitfähige Haftvermittler, der aus einem haftenden zunächst gelösten Polymer besteht, in dem Leitgraphite oder Leitruße suspendiert sind, wird auf den Aluminium-Kollektor in einer Dicke im µm-Bereich aufgetragen, beispielsweise durch Aufsprühen oder ein Tauchbad und anschließender Trocknung. Bei diesem Verfahren wird eine gute mechanische Anbindung erreicht, und trotz der Anwesenheit der dünnen Aluminiumoxidschicht werden sehr niedrige Impedanzen in der unter Verwendung so behandelter Elektrodenableiter hergestellten Batterie erzielt. Durch Anwesenheit von elektrisch hochleitenden Bestandteilen im Haftvermittler wird offenbar der Übergangswiderstand zwischen Aluminium und Primer deutlich herabgesetzt. Der organische Bestandteil des Primers ist aber in der Regel bei hohen Temperaturen wie 80° C und einer typischen maximalen Arbeitsspannung der Zelle von 4,2 V elektrochemisch nicht stabil und zersetzt sich irreversibel. Hierbei entstehen gasförmige Reaktionsprodukte, und die Zelle schwillt an, insbesondere in einer Softpack-Verpackung, d. h. einer Verpackung in Aluminium/Kunststoffverbundfolie, die in der Regel tiefgezogen ist. Zudem steigt die Impedanz, und die danach noch nutzbare Kapazität sinkt, die Zelle wird irreversibel geschädigt.

Die Dokumente DE 101 14 232 C2 und DE 34 12 234 A1 beschreiben elektronisch leitfähige Haftvermittler mit metallischem Leitmaterial. Hierbei besteht die Beschichtungsmasse aus einer Suspension von metallischen Partikeln in einem gelösten organischen Binder, aber die zuvor angesprochenen elektrochemischen Nachteile treten auch bei derartigen Beschichtungen auf.

Elektrochemisch unter diesen Bedingungen in dem galvanischen Element weitaus stabilere Binder sind fluororganische Polymere wie Polyvinylidendifluorid, kurz PVDF. Eigene Untersuchungen zeigen, daß Gasung bei hohen Temperaturen zeitlich extrem verzögert wird und trotzdem beim Zellbetrieb niedrige Impedanzen und gute Zyklenfestigkeit erreicht werden. Ein großer Nachteil ist jedoch, daß die großtechnische Beschichtung sehr schwierig ist, da hoch siedende Lösungsmittel verwendet werden müssen, die sehr schwer anschließend wieder zu entfernen sind. Zudem ist eine naßchemische Beschichtung aus umweltpolitischer Sicht stets ungünstig, da zu entsorgende Lösemittel anfallen. Darüber hinaus ist die Beschichtungsgeschwindigkeit begrenzt, da das zum Teil hoch siedende Lösemittel abdampfen muß.

Die US 5,518,839 beschreibt eine galvanische Beschichtung eines Aluminiumkollektors mit Metallen wie Nickel, Kupfer, Chrom, Titan und Mischungen aus diesen. Neben der ungeeigneten elektrochemischen Stabilität in den eingangs genannten Zellen für die Metalle Nickel, Kupfer und Chrom wird bei Titan keine Verbesserung der Impedanz erzielt. Zudem sind galvanische Abscheideverfahren für den angegebenen Zweck wenig hochgeschwindigkeitstauglich und in der Regel umweltbelastend und mit entsprechenden Auflagen verbunden.

Die US 5,047,302 beschreibt Metalle und Legierungen aus der Gruppe Au, Pt, Ni, Cr oder Cr-Ni, die auf einen Aluminumableiter, von dem die natürliche Oxidschicht nicht zuvor entfernt wurde, aufgebracht werden. Sämtliche dieser Beschichtungen sind jedoch in einer galvanischen Zelle der eingangs genannten Art elektrochemisch inkompatibel.

Der Erfindung liegt die Aufgabe zugrunde, eine Vorbehandlung des positiven Aluminiumableiters für Zellen der eingangs genannten Art anzugeben, die die Vorteile keine Ätzung, kein elektrochemisch instabiler Polymer-Binder, sowie eine dünne, schnelle sowie die Zellimpedanz deutlich erniedrigende, elektrochemisch aber dennoch kompatible Beschichtung auf sich vereinigt und dadurch auch noch zusätzlich die Energiedichte zu verbessern.

Diese Aufgabe wird durch die Merkmale des Anspruchs 1 gelöst. Vorteilhafte Ausgestaltungen der Erfindung sind den Unteransprüchen zu entnehmen.

Erfindungsgemäß ist dabei der im wesentlichen aus Aluminium (Al) bestehende Ableiter der positiven Elektrode mit einer Cu-Al-Legierung (Cu-Al-Bronze) beschichtet. Die Beschichtungslegierung besteht überwiegend aus Cu, sie enthält 0,1 bis 40 Gew.-% Al, vorzugsweise 10 bis 20 Gew.-% Al und insbesondere 13 bis 17 Gew.-% Al, der Rest ist Cu. Der positive Ableiter ist vorzugsweise ein Aluminiumstreckgitter bzw. Aluminiumstreckmetall oder eine in beliebiger Geometrie gelochte oder eine massive Aluminiumfolie.

Die Beschichtungslegierung wird mittels einer physikalischen oder chemischen Dampfabscheidung durch Co-Verdampfung von Kupfer und Aluminium auf den Al-Ableiter aufgebracht. Die Dicke der Beschichtung liegt im Bereich von 20 bis 100 nm, insbesondere bei 40-60 nm.

Cu-Al-Bronzen besitzen teilweise eine sehr hohe Korrosionsbeständigkeit (Verwendung von Cu-Al-Bronzen im Schiffsbau) verbunden mit sehr guter elektrischer Leitfähigkeit (Cu-Anteil in Cu-Al-Bronzen), sind aber wegen des gegen Korrosion benötigten Al-Anteils von sprödem Charakter und können somit nicht mehr als Metallfolie verarbeitet werden, ähnlich wie Chrom, das sich aufgrund seiner mechanischen Eigenschaften auch nur als Überzug verwenden läßt.

Überraschenderweise hat sich gezeigt, daß man Cu-Al-Bronzen unter Erhaltung der Stöchiometrie schnell, effizient und gleichmäßig auf eine unbehandelte metallische Trägerfolie mittels eines physikalischen thermischen Verdampfungsverfahrens mit ausreichender Haftung aufbringen kann, das massenproduktionstauglich und kostengünstig ist. Die Beschichtungsgeschwindigkeiten liegen dabei in Größenordnungen von Metern pro Sekunde. Die Stöchiometrie wird dabei effektiv durch Co-Verdampfen von Kupfer und Aluminium erhalten.

Bei der Beschichtungslegierung wird es sich im allgemeinen nicht um eine hoch- oder höchstreine Legierung handeln, da beispielsweise die beim Verdampfen genutzte Tiegeloberfläche geringste weitere Verunreinigungen zuführen kann. Die Beschichtungslegierung kann daher gegebenenfalls geringe Spuren weiterer Bestandteile enthalten, die die gewünschten elektrochemischen Eigenschaften wie exzellenten Korrosionsschutz in der Anwendung nicht beeinträchtigen.

Mit dem erfindungsgemäßen Aufbringen einer Kupfer-Aluminium-Legierung wird ein Ableitermaterial mit positiven Eigenschaften insbesondere für die Lithium-Polymer-Batterie realisiert, obwohl diese dünne aufgebrachte Metallschicht kein haftvermittelndes Polymer enthält, wie es beim klassischen Primer der Fall ist.

Typische Elektrolyte solcher galvanischer Elemente enthalten als Leitsalz LiPF₆ und damit bedingt durch Hydrolyse immer Spuren von HF, also Flußsäure. Auch diese Spuren können mit der Zeit die Kollektoren angreifen, die Impedanz steigt, wenn die Passivierungsschicht stetig wächst. Im Kontakt mit Kupfer wird eine extrem dichte und dünne Schutzschicht gebildet. Dies ist auch der Grund, daß Kupfergefäße einige der wenigen geeigneten Behältnisse zum Aufbewahren von Flußsäure sind. Insofern kann sich der hohe Cu-Gehalt in der Legierung hier noch zusätzlich positiv auswirken.

Hervorzuheben ist auch die ausgezeichnete Lagerstabilität der Beschichtung unter Umgebungsbedingungen. Auch erst nach mehreren Monaten verarbeitete und so gelagerte Streckgitter zeigen praktisch keinen Anstieg der durch die Beschichtung niedrigen Impedanz in der galvanischen Zelle.

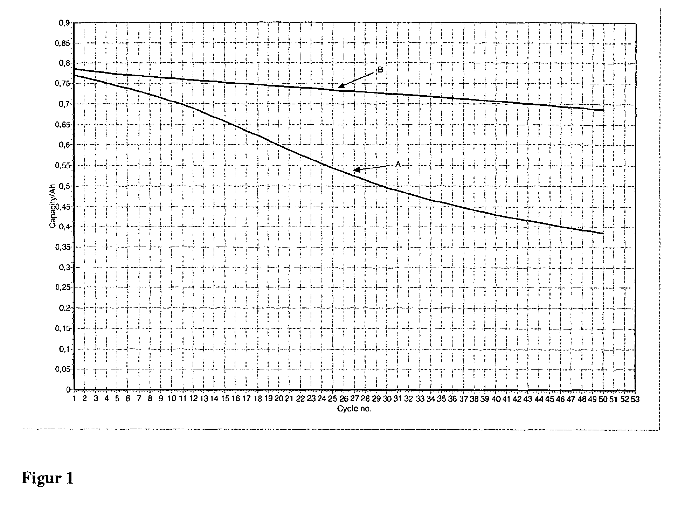

Die so hergestellten Kollektoren zeigen herausragende Eigenschaften in der galvanischen Zelle, insbesondere in der Impedanz, siehe Tabelle 1, und in der Zyklenstabilität, die in der Figur 1 dargestellt sind.

**Tabelle 1:**

| Lithiumpolymerzelle mit den äußeren Abmessungen 4,2 x 35 x 66 mm³ und einer Kapazität von 780 mAh typ.. | | |
|---|---|---|
| **Ausführung der Zelle** | **Impedanz Wechselstrom (AC) 1 kHz bei 3,9 V** | **Gasung bei 80 °C nach 48 h, Zellspannung initial 4,2 V** |
| **Mit Primer beschichteter Al-Ableiter (A)** | 42mOhm | Starke Gasung |
| **Mit erfindungsgemäß metallbeschichtetem Al-Ableiter (B)** | 31 mOhm | Keine Gasung |

Die Impedanzen der Zellen mit so hergestellten Kollektoren liegen im Vergleich zu Zellen mit geprimerten Kollektoren deutlich niedriger, und die Zellen zeigen ein geringeres Gasungsverhalten bei 80 °C und 4,2 V.

Figur 1 zeigt die Kapazität C (Capacity/Ah) der Zellen in Abhängigkeit von der Zyklenzahl (Cycle no.) bei einer 60 °C Zyklisierung mit 750 mA mit Ladung bis 4,2 V und Entladung bis 3 V. Die Zyklenstabilität der erfindungsgemäßen Zelle (B) bei 60 °C ist deutlich verbessert.

## Patentansprüche

1. Galvanisches Element mit mindestens einer Lithium interkalierenden Elektrode, dessen positive Elektrode einen im wesentlichen aus Aluminium (Al) bestehenden Ableiter besitzt, **dadurch gekennzeichnet, daß** der Ableiter mit einer Cu-Al Legierung beschichtet ist.

2. Galvanisches Element nach Anspruch 1, **dadurch gekennzeichnet, daß** die Beschichtungslegierung überwiegend aus Cu besteht.

3. Galvanisches Element nach Anspruch 2, **dadurch gekennzeichnet, daß** die Beschichtungslegierung 0,1 bis 40 Gew.-% Al, Rest Cu enthält.

4. Galvanisches Element nach Anspruch 3, **dadurch gekennzeichnet, daß** die Beschichtungslegierung 10 bis 20 Gew.-% Al, insbesondere 13 bis 17 Gew.-% Al, Rest Cu enthält.

5. Galvanisches Element nach einem der Ansprüche 1 bis 4, **dadurch gekennzeichnet, daß** der Ableiter ein Aluminiumstreckgitter bzw. Aluminiumstreckmetall oder eine in beliebiger Geometrie gelochte oder eine massive Aluminiumfolie ist.

6. Galvanisches Element nach einem der Ansprüche 1 bis 5, **dadurch gekennzeichnet, daß** die Beschichtungslegierung mittels einer physikalischen oder chemischen Dampfabscheidung auf den Al-Ableiter aufgebracht ist.

7. Galvanisches Element nach einem der Ansprüche 1 bis 6, **dadurch gekennzeichnet, daß** die Beschichtungslegierung durch thermisches Co-Verdampfen der Legierungsbestandteile aufgebracht ist.
